# EUROPEAN PATENT SPECIFICATION

(11) **EP 4 467 395 B1**
(45) Date of publication and mention of the grant of the patent: **24.12.2025**
(21) Application number: 23174538.1
(22) Date of filing: 22.05.2023
(51) Int. Cl.: B60R 9/055

(54) **CARGO CARRIER**
LASTENTRÄGER
SUPPORT DE CHARGEMENT

(43) Date of publication of application: 27.11.2024
(73) Proprietor: Thule Sweden AB, 335 04 Hillerstorp (SE)
(72) Inventor: ERIKSSON, Henrik, 55448 Jönköping (SE); KVARNVIK, Gustav, 33593 Åsenhöga (SE); Ståhl, Anton, 33571 Hestra (SE); Fritsche, Günther, 92353 Postbauer (DE); Blank, Andreas, 92318 Neumarkt (DE); Emmerling, Alexander, 92360 Mühlhausen (DE); Andreasson, Jimmy, 55445 Jönköping (SE)
(74) Representative: Wallentin, Lars

(56) References cited:
- US-A1- 2021 178 979
- US-B2- 9 290 131
- US-S- D 773 378

## Description

### TECHNICAL FIELD

The present disclosure relates to a cargo carrier, especially to roof boxes and to reduction of aerodynamic drag and improvements in safety and usability thereof.

### BACKGROUND OF THE INVENTION

In order to increase the cargo capacity of a vehicle it is common to rely on roof mounted cargo carriers such as roof boxes or roof baskets, which allows additional cargo to be carried on the roof of the vehicle in question. This trend has grown stronger with the ever increasing need for mobility while simultaneously striving to reduce the impact on the environment which our personal transportation might cause.

A roof box is beneficial in this sense as it allows a temporary increase of luggage capacity of a vehicle, which could allow a family to own a smaller car than it would otherwise need had it not been for the roof box.

However, since a roof box by being mounted to the roof of the vehicle will have an effect on the aerodynamic drag of the associated vehicle and thus on the fuel/energy consumption thereof, manufacturers of roof boxes constantly strive to develop roof boxes with improved aerodynamic efficiency.

Moreover, the safety of the roof box and user experience while using the roof box is constantly under development and improvement. For instance, a known problem with some prior art roof boxes which are loaded with cargo and subjected to a forceful deceleration is "fish mouthing", which is when a gap forms between the base and the lid of the roof box in the front thereof and which could risk letting cargo escape from the inside of the roof box and thus form a danger.

### SUMMARY OF THE INVENTION

In view of the above, an object of the present invention is to provide an improved cargo carrier which alleviates at least one of the drawbacks of the prior art. For example, an object of the present invention is to provide a cargo carrier with improved safety. Further still, it is an object of the present invention to reduce the environmental impact of the cargo carrier both in terms of the material used and in terms of negative impact on the energy consumption of the associated vehicle. Further still, it is an object of the present invention to improve the ease of use of the cargo carrier.

The object is achieved by the subject-matter of the independent claims. Advantageous embodiments may be found in the dependent claims and in the accompanying description and drawings.

In a first aspect is a cargo carrier for mounting to a roof of a vehicle provided. The cargo carrier comprising a base and a lid hingedly associated with the base for moving of the lid between an open position and a closed position in relation to the base. The base and the lid defining an interior volume of the cargo carrier which can be accessed by pivoting the lid in relation to the base into the open position. The base comprises a rim portion defining a perimeter of the base, wherein the lid comprises an interior volume portion being arranged at least partially forward of and above the rim portion when the lid is in the closed position in relation to the base. The interior volume portion reduces the risk of a gap forming between the lid and the base when the lid is subjected to a forwardly directed force, e.g. from loose cargo inside the cargo carrier during a rapid deceleration.

A forward interior surface of the lid may be arranged above a forward portion of the rim portion, whereby any loose cargo is directed to this forward interior surface and thus is a predictability provided in where the resultant force will occur. The lid of the cargo carrier can thus more easily be provided with a geometry intended for withstanding this force and thus can the safety of the cargo carrier be improved.

The interior volume portion may be defined by a protrusion in the lid, thus providing an additional effect of a more narrow and tapering forward facing interface towards the headwind during travel which reduces the drag generated by the cargo carrier.

The lid may be formed out of one sheet of material.

The lid may comprise a front deflector being configured to deflect wind around the base and wherein the deflector is arranged below the protrusion. The deflector further by its arrangement below the protrusion facilitates reducing the risk of a gap forming between the lid and the base, improving the safety of the cargo carrier.

The deflector may extend essentially linearly from the protrusion to a bottom edge of the lid.

The vertical extension of the deflector from the protrusion to the bottom edge may be larger in a central portion than in a lateral portion of the deflector. Accordingly, the deflector has the longest extension centrally where the risk of a gap forming is the largest. Where the risk is lower, laterally on the cargo carrier, less material can be used in the deflector.

The lid may be hingedly associated with the base such that the lid is pivotable around a lid axis being essentially parallel with a longitudinal direction of the cargo carrier.

The protrusion may have an elongation in a lateral/transverse direction of the lid, thus forming a structural reinforcement of the lid. The protrusion may thus form a rib with lateral extension along the width of the lid.

The lid may further comprise a lid extension portion arranged posteriorly of the protrusion and being configured to allow displacement/movement of the interior volume portion in a forward and/or downward direction in relation to a top surface of the lid when a forwardly directed force is applied to the inside of the protrusion in the lid. The risk of failure of the lid during such circumstances can thus be reduced, by providing inherent and predefined extension portions therein. Moreover, in combination with the protrusion and the interior volume portion, the probability of that the force will arise in a certain position will increase whereby the lid extension portion can be formed accordingly.

The lid extension portion may be formed by a transition in the lid having a concave cross-sectional curvature. Accordingly, by the lid extension portion deviating from a continuous curvature and/or shape of the lid, the lid is provided with inherent ability to be resiliently extended upon being exerted with a force on the inside of the protrusion.

The lid extension portion may form a height difference between a first portion and a second portion of the lid such that when a pulling force is applied in the plane of the first portion and/or in the plane of the second portion over the lid extension portion, a rotational force will be formed in the lid extension portion acting to reduce the height difference. The inherent flexibility in the material of the lid in combination with the aforementioned geometric properties provides a certain amount of extension to the lid, which reduces the risk of too high stresses forming in the lid and failure thereof.

The lid extension portion may extend at an angle in relation to a longitudinal direction of the cargo carrier and wherein at least a portion of each lid side portion is not provided with a lid extension portion. Accordingly, the direction of movement/displacement of the internal volume portion can be controlled to a certain extent as the elongation/extension occurs in the lid extension portion and especially in the longitudinal direction of the cargo carrier across the lid extension portion. As a portion of each lid side portion is not provided with a lid extension portion, this can be used to control where the elasticity is provided in the lid.

The portion of each lid side portion not provided with a lid extension portion may be at least partially arranged below a forward interior surface of the lid, thus providing a forward and/or downward movement/displacement of the interior volume portion.

In a second aspect is a cargo carrier provided for mounting to a roof of a vehicle. The cargo carrier comprising a base and a lid hingedly associated with the base for moving of the lid between an open position and a closed position in relation to the base. The base and the lid defining an interior volume of the cargo carrier which can be accessed by pivoting the lid in relation to the base into the open position, wherein said base comprises a rim portion defining a perimeter of the base. The lid comprises a gripping portion attached in a recess of the lid and wherein the recess forms an interior abutment surface configured to abut against the base when the lid is in the closed position. The lid can thus be provided with support which can be hidden from view from the user, thus providing less limitations in the design of the cargo carrier without compromising with the function. The gripping portion may further be provided with locking functionality.

The interior abutment surface may have an extension along a longitudinal direction of the cargo carrier, for instance parallel therewith or in a curved extension. The interior abutment surface may further be essentially horizontally arranged. Preferably, the interior abutment surface extends correspondingly to the rim portion of the base.

At least one gripping portion and corresponding recess may be arranged on a side portion of the lid.

The interior abutment surface may be essentially aligned in a longitudinal direction of the cargo carrier with a cargo carrier locking device for locking the lid in the closed position in relation to the base, thus facilitating providing a defined position where the lid meets the base and where the locking device is to engaged.

The recess may further comprise an attachment surface for a lid hinge, said gripping portion conceals said attachment surface when attached in the recess.

The interior abutment surface may be configured to abut against a rim portion of the base when the lid is in the closed position.

In a third aspect is a cargo carrier for mounting to a roof of a vehicle provided. The cargo carrier comprising a base and a lid hingedly associated with the base for moving of the lid between an open position and a closed position in relation to the base. The base and the lid defining an interior volume of the cargo carrier which can be accessed by pivoting the lid in relation to the base into the open position. The lid comprises at least one reinforcing element for increasing the rigidity of the lid.

The at least one reinforcing element may be resilient and attached to the lid such that a pretensioning force is provided to the lid, thus providing a lid having a base prestressed state giving it improved rigidity. As the rigidity in a lid of a cargo carrier such a roof box may be quite low, only a low pretensioning force is required for providing stability. The reinforcing element is further beneficial in terms of absorbing or adjusting for manufacturing tolerances, which can be problematic for parts manufactured from plastic sheet material.

Each reinforcing element may along a length thereof comprises discrete attachment points to the lid, facilitating assembly of the lid and each reinforcing element.

The reinforcing element may be attached to a lid side portion and wherein the pretensioning force from the reinforcing element is acting on the lid side portion in a direction away from a central longitudinal plane of the cargo carrier, thus providing resistance against the bending force that the weight of the lid causes when placed in the open position. Moreover, during closing of the lid must in most cases the force of a lid lifter, which provides an opening force to the lid, be overcome. This further reinforces the bending force when the user pulls on the lid in the closing direction, which could cause unwanted elastic deformation being especially noticeable in the lid side portions which are intended to abut against/around the base. The reinforcing element reduces the risk of unwanted interference between the base and the lid.

Each reinforcing element may be attached to opposite lid side portions, providing a lateral/transverse extension of each reinforcing element.

An end portion of each reinforcing element may be attached in a first attachment point to a lid hinge, thus providing a reinforcing force directly to where the lid is hinged and where the force is as highest as the lid will be supported by the hinges when in the open position.

The lid may comprise a cutout at a front and/or a rear thereof and wherein at least one reinforcing element is arranged to support opposite lid side portions adjacent to the cutout, thus mitigating any weakening effect the cutout could otherwise have on the lid side portions adjacent to the cutout.

A plurality of reinforcing elements may be arranged in the lid distributed along the longitudinal direction of the cargo carrier.

Each reinforcing element may be attached to the lid in at least one second attachment point securing each reinforcing element to an interior surface of the lid.

Each reinforcing element may be formed from an elongate resilient element, preferably out of a rod and/or bar of metallic material being bent into a generally U-shaped extension.

### BRIEF DESCRIPTION OF THE DRAWINGS

With reference to the appended drawings, below follows a more detailed description of embodiments of the invention cited as examples.

In the drawings:
Figure 1 discloses a front perspective view of a cargo carrier.
Figure 2 discloses a rear perspective view of a cargo carrier.
Figure 3 discloses a rear perspective view of a lid of a cargo carrier.
Figure 4 discloses a cross-sectioned detail view of a front portion of a cargo carrier.
Figure 5 discloses front perspective view of a front portion of a cargo carrier.
Figure 6 discloses a front view of a cargo carrier.
Figure 7 discloses a perspective detail view of a recess in a lid side portion of a cargo carrier.
Figure 8 discloses a perspective view of a gripping portion of a cargo carrier.
Figure 9 discloses a cross-section detail view of a cargo carrier.
Figure 10 discloses a rear view of a cargo carrier.
Figure 11 discloses a bottom view of a rear portion of a lid of a cargo carrier.
Figure 12 discloses a detail view of a reinforcing element of a cargo carrier.

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

### DETAILED DESCRIPTION

The following detailed description is merely exemplary in nature and is not intended to limit application and uses. Furthermore, there is no intention to be bound by any theory presented in the preceding background or summary or the following detailed description.

Embodiments of the present disclosure are described in detail with reference to embodiments thereof as illustrated in the accompanying drawings. References to "one embodiment," "an embodiment," "some embodiments," etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Spatially relative terms, such as "beneath," "below," "lower," "above," "on," "upper," "opposite" and the like, may be used herein for ease of description to describe one element or feature's relationship to another element(s) or feature(s) as illustrated in the figures. The spatially relative terms are intended to encompass different orientations of the device in use or in operation in addition to the orientation depicted in the figures. The apparatus may be otherwise oriented (e.g., rotated 90 degrees or at other orientations) and the spatially relative descriptors used herein may likewise be interpreted accordingly.

Terms describing parts or members as "releasable" and/or "detachable" relate to configurations in which the parts or members are at least decouplable from another part or member without destroying one of the cooperating parts or members. These terms may also describe configurations in which the parts and members may be decoupled or disengaged without tools (tool-free). Terms describing parts or members as "positively locked" and/or "positively coupled" relate to configurations in which the parts or members are in positive engagement, positive mechanical engagement, interlocking contact.

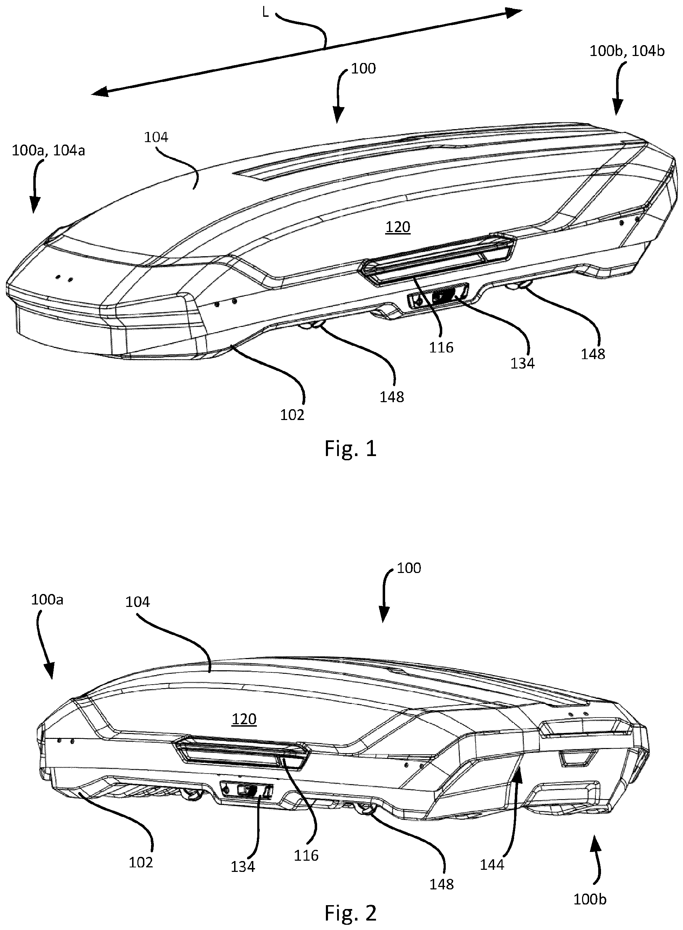

Figures 1 and 2 discloses a front perspective and rear perspective view of a cargo carrier 100 according to the teachings herein. The cargo carrier 100, typically a roof box 100, which is most commonly mounted to a vehicle by means of a roof rack (not shown) and a suitable attachment element 148 for securing the roof box 100 to the roof rack, such as gripping claws or a T-track adapter, between the roof box and the roof rack.

The cargo carrier 100 comprises a base 102 and a lid 104 hingedly associated with the base 102 for moving of the lid 104 between an open position and a closed position in relation to the base 102. The base 102 and/or lid 104 is preferably formed from a plastic and/or composite material for instance in a thermoforming and/or vacuum forming process. As is realized by a person skilled in the art, other manufacturing methods and materials could also be applied and the teachings herein are not limited to cargo carriers the aforementioned materials and manufacturing methods.

As is illustrated in Figure 1, a longitudinal direction L of the cargo carrier 100 is defined. The longitudinal direction L of the cargo carrier 100 is to be arranged parallel with a corresponding longitudinal direction of a vehicle when the cargo carrier 100 is mounted thereto. A front portion 100a, 104a of the cargo carrier 100 and the lid 104 respectively are defined in relation to the longitudinal direction L. Correspondingly, a rear portion 100b, 104b of the cargo carrier 100 and the lid 104 in relation to the longitudinal direction L are also defined in Figure 1. A transverse or lateral direction T is correspondingly defined and extending perpendicularly to the longitudinal direction L.

The base 102 and the lid 104 defines an interior volume V of the cargo carrier 100, which is enclosed thereby when the lid 104 is in the closed position. The interior volume V is typically to a certain extent protected from the surrounding element such that for instance water or dust cannot enter the cargo carrier 100 during normal use and thus risk contaminating any of the cargo stored therein. The interior volume V can be accessed by pivoting the lid 104 in relation to the base 102 into the open position.

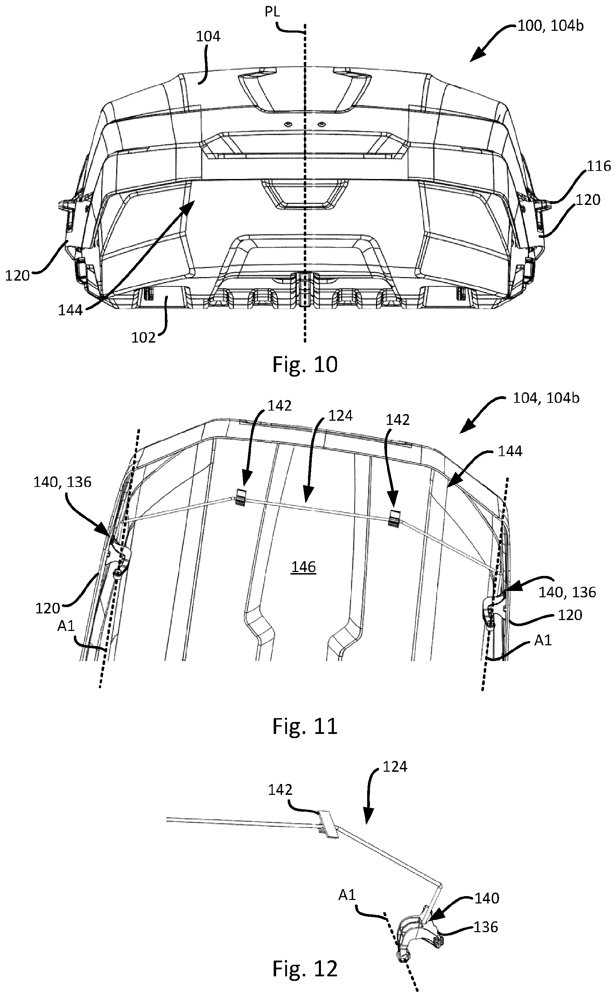

The cargo carrier 100 may comprise a cargo carrier locking device 134 for locking the lid 104 in the closed position in relation to the base 102. As is illustrated, the locking device 134 may be arranged on the base 102. One cargo carrier locking device 134 may be provided on each side of the cargo carrier 100, for instance for providing dual sided opening of the cargo carrier 100. The locking device 134 may be configured to automatically lock the lid 104 against the base 102 the lid 104 is brought into the closed position. The lid 104 is preferably hingedly associated with the base 102 such that the lid 104 is pivotable around a lid axis A1 (shown in Figures 10 and 11) being essentially parallel with the longitudinal direction L of the cargo carrier 100. The cargo carrier 100 may as mentioned be provided with dual sided opening such that the lid 104 can be pivoted around a lid axis A1 at the inside of either lateral side of the lid 104. The locking device 134 may thus be configured to cooperate with hinges 136 provided on the lid 104, allowing the hinges 134 to function both as latches and as hinges. Further still, one or more lid lifters may be provided which facilitate opening and/or closing of the lid 104. The lid lifter may be configured such that it provides a force in the opening direction to the lid 104 when the lid 104 is brought out of the closed position in relation to the base 102 and such that the lid 104 is held in the open position by the lid lifter. Lid lifters are well known in the art and will thus not be described further herein.

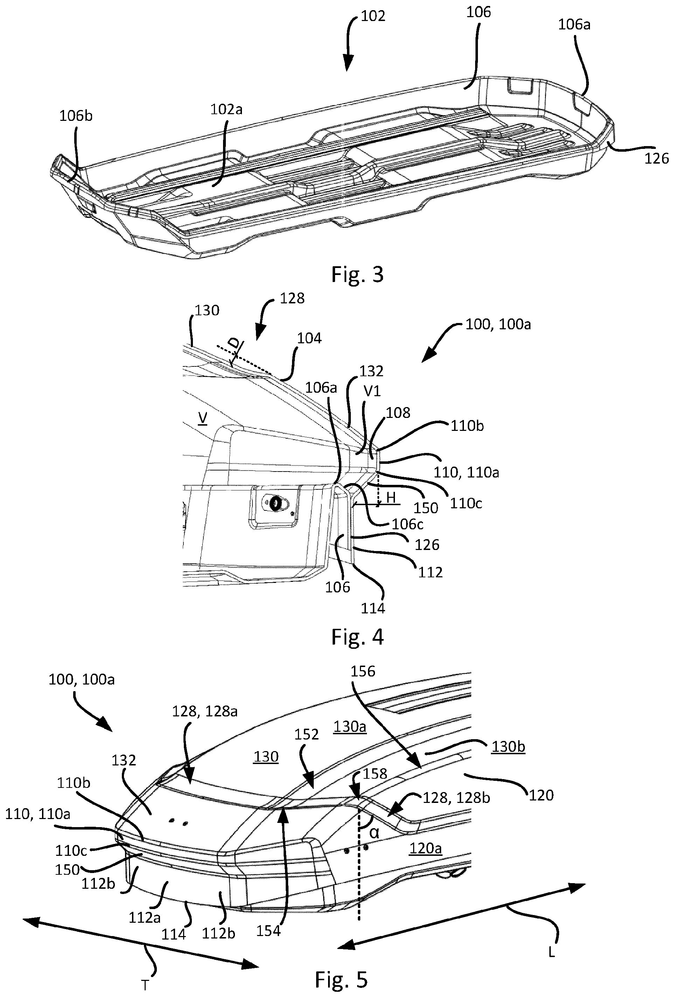

The base 102, as illustrated in Figure 3, may comprise a rim portion 106. The rim portion 106 defines the perimeter of the base 102. The rim portion 106 may further be configured to abut around at least a portion of its exterior peripheral surface 126 against the inside of the lid 104 when the lid 104 is in the closed position, thus preventing entry of e.g. water or dust into the interior volume V during normal use of the cargo carrier 100. The rim portion 106 is preferably formed integrally with the base 102 and protrudes at an angle from a bottom portion 102a thereof.

A rear portion 106b of the rim portion 106 may be arranged to protrude above the rest of the rim portion 106, as will be elaborated further on in conjunction with Figures 10 and 11.

Figure 4 discloses a side cross sectioned view in the plane PL (shown in Figure 10) of a front portion 100a of the cargo carrier 100.

The cargo carrier 100 comprises an interior volume portion V1 being arranged at least partially forward of and above the rim portion 106 when the lid 104 is in the closed position in relation to the base 102. Normally when carrying cargo in a roof box cargo carrier, it is recommended to tie the cargo down using straps or similar attachments to the base 102. This is to prevent the cargo from sliding around and especially for reducing the risk that cargo escapes from the inside of the cargo carrier 100 during a rapid acceleration or deceleration. Regardless of if the cargo is tied down to the base 102 or not, the cargo carrier 100 should also be formed to reduce the risk of cargo escaping from the interior volume V for instance if it is forgotten to tie down the cargo or if the cargo or a part thereof for some reason becomes detached from the base 102. The rim portion 106 typically serves this purpose in addition to the provision of a seal against the lid 104. However, the interior volume portion V1 as defined herein may accordingly form a safety zone in which cargo can be caught, should it become detached from the base 102 and move in a forward direction in relation to the cargo carrier 100. The risk of a phenomenon called fish mouthing occurring can thus be reduced, where an opening is formed in the front portion 100a between the lid 104 and the base 102 by a deformation of the cargo carrier 100 when subjected to rapid deceleration.

The interior volume portion V1 may be defined by a protrusion 110 in the lid 104. The protrusion 110, which is more clearly shown in Figure 5, has an extension in the lateral direction T of the cargo carrier 100. The protrusion 110 may extend laterally along the a majority of or along the entire width in the lateral direction T of the front portion 100a of the cargo carrier 100. The protrusion 110 forms the forward most part of the cargo carrier 100 and thus part of a gradually increasing, in the forward to rearward direction of the cargo carrier 100, interface area facing the headwind. Accordingly, the aerodynamic drag of the cargo carrier 100 is reduced. Moreover, by having an extension in the lateral direction T, the protrusion 110 also functions as an integral rib which improves the strength of the lid 104. Especially in the case where the lid 104 is hinged such that it pivots along each side portion 120 thereof in relation to the base 102, the protrusion 110 reduces any elastic deformation taking place during the opening and closing of the lid 104.

The cross-sectional shape of the protrusion 110 may as shown in Figure 4 comprise an essentially flat forward facing portion 110a. The forward facing portion 110a while having an essentially flat cross-sectional shape may have a curved extension in the lateral direction T. The forward facing portion 110a may be delimited upwards by an upper curved portion 110b and downwards by a lower curved portion 110c. The upper curved portion 110b and the lower curved portion 110c having a cross-sectional bending radius as illustrated in Figure 4 being smaller than a height H in the longitudinal direction L of the protrusion 110 as measured in the plane PL of the cargo carrier 100. By providing a cross-sectional shape to the protrusion 110 according to the foregoing can the strength of the lid 104 be improved, both in comparison with a lid without a protrusion and with a lid with a protrusion having a cross-sectional shape with continuous bending radius.

The upper curved portion 110b may be delimited upwards by a downwardly sloping portion 132 of the lid 104. The downwardly sloping portion 132 having a cross-sectional incline in the forwards and downwards direction towards the upper curved portion 110b, thus providing a tapering shape to the protrusion 110.

The lower curved portion 110c may be delimited downwards by an upwardly sloping portion 150. The upwardly sloping portion 150 having a cross-sectional incline in the forwards and upwards direction towards the lower curved portion 110c. The upwardly sloping portion 150 is preferably arranged at least partially above a forward portion 106a of the rim portion 106, thus facilitating that any cargo impacting the upwardly sloping portion above the rim portion 106 will slide upwards and towards a forward interior surface 108 of the lid 104. Accordingly, a vertical lever arm between a top surface 130 of the lid 104 and the impact force will be reduced, around which the forwardly directed force from the cargo will act when forming a rotational force on the front portion 104a of the lid 104 acting to form a gap between the lid 104 and the base 102. The risk of the fish mouth phenomenon taking place is thus reduced as the reduced lever arm reduces the resulting rotational momentum force.

The forward interior surface 108 of the lid 104 is preferably arranged above the forward portion 106a of the rim portion 106.

The lid 104 may further comprise a front deflector 112 being arranged below the protrusion 110. The front deflector 112 is preferably integrally formed with the lid 104. The front deflector 112 preferably delimits the upwardly sloping portion 150 in the downwards direction. The interior of the front deflector 112 forms the abutment surface against the forward portion 106a of the rim portion 106, specifically against the exterior peripheral surface 126 thereof. The cargo carrier 100 may be configured such that a majority of the vertical extension of the exterior peripheral surface 126 of the forward portion 106a of the rim portion 106 is in contact with the front deflector 112 when the lid 104 is in the closed position.

The upwardly sloping portion 150 of the lid 104 preferably transitions to the deflector 112 at a vertical position which is near or at the same vertical height as a vertical position of a transition from the exterior peripheral surface 126 of the front portion 106a to an inclined rim portion 106c at the front portion 106a. The inclined rim portion 106c being inclined away from the deflector 112 with increasing height from the bottom portion 102a.

The deflector 112 preferably extends essentially linearly from the protrusion 110 to a bottom edge 114 of the lid 104. The deflector 112 will, in addition to the aerodynamic effect thereof when deflecting the wind around the base 102, by its linear and vertical extension below the protrusion 110 further reduce the risk a gap forming between the lid 104 and the base 102, i.e. the fish mouth phenomenon, during rapid deceleration of the cargo carrier 100.

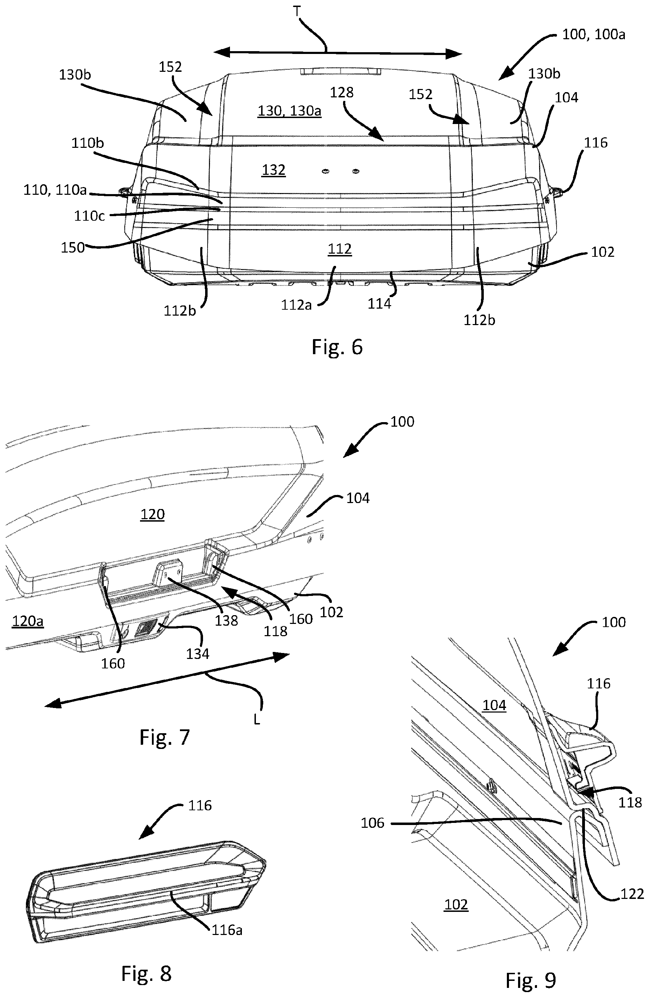

As illustrated in Figures 5 and 6 which respectively shows a perspective and front view of the front portion 100a of the cargo carrier 100, the vertical extension of the deflector 112 from the protrusion 110 to the bottom edge 114 may be larger in a central portion 112a than in a lateral portion 112b of the deflector 112. Accordingly, the bottom edge 114 along the deflector 112 may be curved when observed from the front as in Figure 6. The curvature of the bottom edge 114 along the deflector 112 allows the aforementioned effects to be achieved in terms of reducing the risk of cargo being ejected from the interior volume V, while the amount of material being used in the manufacturing of the lid 104 can be reduced. This because the vertical extension of the deflector 112 being the largest in the central portion 112a, where the risk is highest that a gap forms between the lid 104 and the base 102, while the vertical extension and thus amount of material of the deflector 112 is reduced in the lateral direction of the deflector 112 where the risk of a gap forming is lower.

The lid 104 may further comprise a lid extension portion 128 arranged posteriorly of the protrusion 110. The lid extension portion 128 is configured to allow displacement of the interior volume portion V1 in a forward and/or downward direction in relation to a top surface 130 of the lid 104 when a forwardly directed force is applied to the inside of the protrusion 110 in the lid 104. Particularly, when a forwardly directed force is applied to the forward interior surface 108 and/or adjacent surfaces of the lid 104, the lid extension portion 128 permits a certain movement thereof and thus an improved/prolonged uptake of the impulse force generated and a reduction of the peak force. Accordingly, by the combination of the protrusion 110 and the lid extension portion 128, the deformation of the lid 104 can be controlled to a certain extent under the aforementioned circumstances which e.g. reduces the risk of a gap forming between the lid 104 and the base 102.

Preferably, the lid extension portion 128 is formed by a geometry of the lid 104 and thus integrally therewith. However, it is also conceivable that the lid extension portion 128 may be formed in a material having differing and more elastic, i.e. lower young's modulus, than that of rest of the lid 104. Such a lid extension portion 104 may be manufactured to be seamlessly integrated into the lid 104.

The lid extension portion 128 may be formed by a transition in the lid 104 having a concave cross-sectional curvature, whereby the curvature provides a resiliency in the lid extension portion 128 to facilitate movement of the interior volume portion V1. Particularly, the curvature provides a resiliency along the surface of lid 104 in the longitudinal direction L of the cargo carrier 100. It is further considered that a convex cross-sectional curvature may also be provided to the lid extension portion 128.

The lid extension portion 128 may form a height difference D between a first portion 130, preferably the lid top portion 130, and a second portion 132, preferably the downwardly sloping portion 132, of the lid 104 such that when a pulling force is applied in the plane of the first portion 130 and/or in the plane of the second portion 132 over the lid extension portion 128, a rotational force will be formed in the lid extension portion 128 acting to reduce the height difference D. The reduction in the height difference D will provide an increase in a length of the lid extension portion 128 as measured along the longitudinal direction L, providing a reduction of the peak force and a prolonged impulse force time compared to a lid not provided with a lid extension portion 128 as defined in the foregoing. While the height difference D is shown as being positive from the second portion 132 to the first portion 130, the opposite relationship is also possible where the second portion 132 is arranged below the first portion 130.

The lid extension portion 128 preferably extends at an angle in relation to the longitudinal direction L of the cargo carrier 100. Moreover, at least a portion 120a of each lid side portion 120 may not be provided with a lid extension portion 128. Preferably the portion 120a of each lid side portion 120 is at least partially arranged below the front interior surface 108 of the lid 104. As shown in Figure 5, the portion 120a is preferably arranged adjacent to and with extension in the longitudinal direction L along the bottom edge 114 of the lid 104. Each portion 120a will thus be less resilient than the part of the lid 104 arranged behind and above the front interior surface 108, thus providing reinforcement of the forward and/or downward movement of the interior volume portion V1 when the front interior surface 108 is subjected to a forwardly directed force. This forward and/or downward movement of the interior volume portion V1 further reduces the risk of a gap forming between the lid 104 and the base 102 in the front portion 100a of the cargo carrier 100. The portion 120a on each side portion 120 of the lid 104 is preferably connected by at least the the deflector 112 and/or by the upwardly sloping portion 100, such that they together form an essentially U-shaped lid portion behind and below the protrusion 110.

A central lid extension portion 128a may be provided, having an extension essentially in the lateral direction T. The extension of the central lid extension portion 128 in the lateral direction T may essentially correspond to the lateral extension of the forward facing portion 110a, thus having a curved extension in the lateral direction T. The central lid extension portion 128a may at either lateral side thereof be connected to a lateral lid extension portion 128b extending in a downwardly and rearwardly direction along the lid side portion 120 towards the portion 120a of each lid side portion 120 not provided with a lid extension portion 128. The lateral lid extension portion 128 may extend downwardly and rearwardly with an angle α in relation to vertical direction of between 0° and 70°, preferably between 20° and 60°. The lateral lid extension portion 128 having the aforementioned extension reinforces the forward and downward displacement/movement of the interior volume portion V1 upon being subjected to a forward directed force.

The lid extension portion 128 may together with the downwardly sloping portion 132 and the top surface 130 of the lid 104 form a transition in the front to rear direction of the lid 104 from a surface geometry of convex, concave and convex. In a plane parallel with the longitudinal direction L and with a surface normal of the lid 104, the downwardly sloping portion 132 has a convex geometry which transitions to a concave geometry of the lid extension portion 128, which transition to convex geometry of the top portion 130.

The cargo carrier 100 disclosed herein may further be provided with geometrical lid reinforcements 128, 152, 154, 156, 158. Each geometrical lid reinforcement is preferably integrally formed with the lid 104. The geometrical lid reinforcements comprising a first continuous section 152 extending along a curved path in the longitudinal direction L of the lid 104 and having a concave cross-sectional shape. The first continuous section 152 may form a height transition in the lateral direction T between a central top portion 130a and a lateral top portion 130b, where the lateral top portion 130b is arranged below the central top portion 130a in a transition direction in the lateral direction T. A second continuous section 156 extending along a curved path in the longitudinal direction L of the lid 104 and having a convex cross-sectional shape is further provided. Preferably, the curved path of the second continuous section 156 is parallel with and follows the curvature of the first continuous section 152. The second continuous section 156 may form a transition between the lateral top portion 130b and the lid side portion 120. The first and/or the second continuous section 152, 156 may intersect the lid extension portion 128, thus forming a first intersection zone 154 and a second intersection zone 158, each forming a structural reinforcement. A first transition zone 154 forms a concave/concave transition zone between the lid extension portion 128 and the first continuous section 152. The second transition zone 158 forms a concave/convex transition zone between the lid extension portion 128 and the second continuous section 154.

As is further shown in Figures 6, 7 and 8, the lid 104 of the cargo carrier 100 may comprise a gripping portion 116. One or more gripping portions 116 may be provided at each lid side portion 120, for facilitating opening and closing of the lid 104. Each gripping portion 116 is preferably provided with a handle 116a, protruding laterally and which the user can grip for opening and closing of the lid 104.

Figure 7 shows a detail perspective view of a recess 118 in the cargo carrier 100 in which the gripping portion 116 is to be arranged, Figure 8 shows a perspective view of gripping portion 116 and Figure 9 shows a cross-section view in a vertical plane parallel with the lateral direction T through a gripping portion 116.

The recess 118 is provided in the side portion 120 of the lid 104 and forms an interior abutment surface 122 configured to abut against the base 102 when the lid 104 is in the closed position. The interior abutment surface 122 may be configured to abut against the rim portion 106 of the base 102. The recess 118 thus forms a support for the lid 104 against the base 102, adding stability to the cargo carrier 100. Further still, by providing a recess 118 into which the gripping portion 116 is attached, an abutment surface 122 can be provided which is hidden from view from the outside of the cargo carrier 100. Accordingly, the geometry of the lid 104 can be chosen more freely without having to compromise with the stability of the lid 104 and closing/locking performance as is elaborated further on below. The abutment surface 122 preferably only extends along a portion of the longitudinal length of the rim portion 106.

As the cargo carrier 100 disclosed herein may be configured for opening by pivoting of the lid 104 in relation to the base 102 around a lid axis A1 (shown in Figures 10 and 11) being essentially parallel with the longitudinal direction L of the cargo carrier 100, the interior abutment surface 122 forms a limit for the pivoting movement of the lid 104 and defines the closed position in the relation to the base 102 by its abutment therewith.

The interior abutment surface 122 has an extension along a longitudinal direction L of the cargo carrier 100. Preferably, the interior abutment surface 122 extends essentially parallel with the lid axis A1 and/or parallel with a top surface of the rib portion 106 of the base 102. At least one gripping portion 116 and corresponding recess 118 may be arranged on each side portion 120 of the lid 104.

The interior abutment surface 122 and/or the recess 118 and/or the gripping portion 116 may be essentially aligned in the longitudinal direction L with the cargo carrier locking device 134. This facilitates improving the reliability of the latching of the locking device 134 as the closed position of the lid 104 as defined by the abutment surface 122 is arranged adjacent to the locking device 134. A force applied to the lid 104 in the closing direction on the gripping portion 116 will thus push a latching element 136, preferably a combined hinge and latching element 136, towards the locking device 134. The recess 118 may further comprise an attachment surface 138 for a lid hinge 136. As mentioned, the lid hinge 136 may function as a latching element for the locking device 134, whereby the gripping portion 116 is arranged in close proximity to the lid hinge 136 for facilitating closing of the lid 104. Preferably, the gripping portion 116 conceals said attachment surface 138 when attached in the recess 118.

Further still, at least one gripping portion attachment protrusion 160 may be provided in the recess 118. The gripping portion attachment protrusion 160 provides a surface onto which the gripping portion 116 may be attached, for instance by means of a mechanical fastener and/or by an adhesive. Each gripping portion attachment protrusion 160 may provide an essentially flat surface facing the gripping portion 116 for facilitating attachment thereof to the lid 104. As shown in Figure 7, two gripping portion attachment protrusions 160 may be provided in the recess 118.

The lid 104 of the cargo carrier 100 may be provided with a plurality of hinges 136 (shown in Figures 11 and 12) distributed along the longitudinal direction L of the cargo carrier 100, where a recess 118 and associated gripping portion 116 is provided aligned in the longitudinal direction L with a hinge 136 being arranged in the middle or adjacent to the middle of the plurality of hinges 136. In one embodiment, three hinges 136 are provided longitudinally distributed at each lateral side of the lid 104 for engagement with receiving attachments (not shown) in the base which forms part of and are releasable by actuation of the locking device 134, where a recess 118 and associated gripping portion 116 is provided longitudinally aligned with the hinge 136 arranged in the middle at each lateral side of the lid 104.

The gripping portion 116 may be monolithically formed, e.g. in a plastic material, and be attached to the lid 104 by an adhesive and/or by one or more mechanical fasteners such screws and/or rivets.

Turning now to Figures 10 to 12. Figure 10 shows a rear view of a cargo carrier 100, Figure 11 shows a bottom perspective view of a rear portion 104 b of a lid 104 of a cargo carrier 100 and Figure 12 shows a perspective view of a reinforcing element 124 of a cargo carrier 100.

In Figure 11, it is illustrated how the cargo carrier 100 may be provided with at least one reinforcing element 124 for increasing the rigidity of the lid 104. The reinforcing element 124 provides support to the lid 104, especially when the lid 104 is in the open position in relation to the base 102, whereby it is pivoted in relation thereto. Particularly as the lid 104 is intended to be pivoted around lid axis A1, which may be arranged in the longitudinal direction L and along each side portion 120 of the lid 104, a force resulting from the weight of the lid 104 is placed on the side portions 120 pushing these against each other. This force is further reinforced by when a user pulls on the gripping portion 116 to bring the lid 104 from the open position to the closed position with a force required to overcome the opposite force of a lid lifter (not shown) which opens the lid 104. These forces may on their own or by interaction cause an elastic deformation of the lid 104 which could cause difficulties in bringing the lid 104 to the closed position by interference with the base 102.

The aforementioned reinforcing element 124 reduces this risk and provides improved dimensional stability to the lid 104.

The at least one reinforcing element 124 may be resilient and attached to the lid 104 such that a pretensioning force is provided to the lid 104. The pretensioning force may be configured to provide a force on the lid side portion 120, preferably to both opposite side portions 120, away from a central longitudinal plane PL, accordingly reducing the risk of interference between the lid 104 and the base 102 during closing/opening of the lid 104.

Each reinforcing element 124 may along a length thereof comprise discrete attachment points 140, 142 to the lid 104. The reinforcing element 124 preferably comprises a first attachment point 140 which is formed in a lid hinge 136. The lid hinge 136 being attached to the lid side portion 120 and thus serves a dual purpose by securing an end of the reinforcing element 124 thereto. This is further beneficial in terms of avoiding the aforementioned elastic deformation of the lid 104 as it is on the hinges 136 that this force is generated when the lid 104 is in the open position. Accordingly, support is provided by the reinforcing element 124 directly to the hinges 136 as this elastic deformation starts to take place, mitigating this problem.

Each reinforcing element 124 may further be attached to the lid 104 in at least one second attachment point 142 securing each reinforcing element 124 to an interior surface 146 of the lid 104. The at least one second attachment point 142 provides stability and maintains the desired orientation of the reinforcing element 124. Each second attachment point 142 may be formed by a clip attached to the reinforcing element 124 and secured to the lid 104 by means of an adhesive such as adhesive tape. Naturally, the second attachment points 142 may be formed integrally with the lid 104 or be attached thereto in other ways as well, as is realized by a person skilled in the art.

Each reinforcing element 124 may be formed from an elongate resilient element, preferably out of a rod and/or bar of metallic material being bent into a generally U-shaped extension to follow the cross-sectional internal contour of the lid 104. It is illustrated how the reinforcing element 124 is provided with a circular cross-sectional shape, but it is to be realized that other shapes are also equally applicable such as rectangular or oval cross-sectional shapes.

A further beneficial effect of the provision of the reinforcing element 124 is that it provides less restrictions in the choosing of the geometrical shape of the lid 104 as a geometry thereof which could potentially reduce the rigidity can be compensated for by one or more reinforcing elements 124. Accordingly, as is illustrated in Figure 10 and 11, the cargo carrier 100 may comprise a cutout 144 at a front 104a and/or a rear 104b thereof. At least one reinforcing element 124 may be arranged to support opposite lid side portions 120 adjacent to the cutout 144. It is in Figure 11 shown how the cutout 144 is provided in the rear portion 104b of the lid 104, which is configured to cooperate with a raised portion 106b of the base 102 as is shown in Figure 3. The rear 100b of the cargo carrier 100 can thus be provided with a posteriorly tapering shape, which reduces the wake and the low pressure zone behind the cargo carrier 100 and thus the induced drag by the cargo carrier 100.

It is further envisioned that a plurality of reinforcing elements 124 may be arranged in the lid 104 distributed along the longitudinal direction L of the cargo carrier 100. Each reinforcing element 124 extending in the lateral direction T of the cargo carrier 100. In a preferred embodiment, the lid 104 is provided with three hinges 136 on each side portion 120 distributed in the longitudinal direction L. A reinforcing element 124 may be provided extending between every two longitudinally aligned hinges 136 in the lateral direction T of the lid 104.

In conclusion a, it is pointed out that the terms like "comprising" or the like are not intended to rule out the provision of additional elements or steps. Let it further be noted that "a" or "an" do not preclude a plurality. In addition, features described in conjunction with the different embodiments can be combined with each other however desired. It is also noted that the reference numbers in the claims are not to be construed as limiting the scope of the claims. Moreover, while at least one exemplary embodiment has been presented in the foregoing summary and detailed description, it should be appreciated that a vast number of variations exist.

It should also be appreciated that the exemplary embodiment or exemplary embodiments are only examples, and are not intended to limit the scope, applicability, or configuration in any way. Rather, the foregoing summary and detailed description will provide those skilled in the art with a convenient roadmap for implementing an exemplary embodiment, it being understood that various changes may be made in the function and arrangement of elements described in an exemplary embodiment without departing from the scope as set forth in the appended claims.

## Claims

1. A cargo carrier (100) for mounting to a roof of a vehicle, the cargo carrier (100) comprising a base (102) and a lid (104) hingedly associated with the base (102) for moving of the lid (104) between an open position and a closed position in relation to the base (102), the base (102) and the lid (104) defining an interior volume (V) of the cargo carrier (100) which can be accessed by pivoting the lid (104) in relation to the base (102) into the open position, wherein said base (102) comprises a rim portion (106) defining a perimeter of the base (102), wherein the lid (104) comprises an interior volume portion (V1) being arranged at least partially forward of and above the rim portion (106) when the lid (104) is in the closed position in relation to the base (102) **characterized by** the protrusion (110) of the lid (104) being configured as a forward most part of the cargo carrier (100) and comprising an essentially flat forward facing portion (110a), an upper curved portion (110b) and a lower curved portion (110c) such that the forward facing portion (110a) is configured to be delimited upwards by the upper curved portion (110b) and downwards by the lower curved portion (110c).

2. The cargo carrier (100) according to claim 1, wherein a forward interior surface (108) of the lid (104) is arranged above a forward portion (106a) of the rim portion (106).

3. The cargo carrier (100) according to claims 1 or 2, wherein the interior volume portion (V1) is defined by a protrusion (110) in the lid (104).

4. The cargo carrier (100) according to any one of the preceding claims 1 to 3, wherein the lid (104) is formed in one sheet of material.

5. The cargo carrier (100) according to claim 3, wherein the protrusion (110) forms a forward most portion of the cargo carrier (100), wherein the lid (104) comprises a front deflector (112) being configured to deflect wind around the base (102) and wherein the deflector (112) is arranged below the protrusion (110).

6. The cargo carrier (100) according to claim 5, wherein the deflector (112) extends essentially linearly from the protrusion (110) to a bottom edge (114) of the lid (104).

7. The cargo carrier (100) according to claim 6, wherein the vertical extension of the deflector (112) from the protrusion (110) to the bottom edge (114) is larger in a central portion (112a) than in a lateral portion (112b) of the deflector (112).

8. The cargo carrier (100) according to any one of the preceding claims 1 to 7, wherein the lid (104) is hingedly associated with the base (102) such that the lid (104) is pivotable around a lid axis (A1) being essentially parallel with a longitudinal direction (L) of the cargo carrier (100).

9. The cargo carrier (100) according to claim 3, wherein the protrusion (110) has an elongation in a lateral direction (T) of the lid (104).

10. The cargo carrier (100) according to claim 3, wherein the lid (104) further comprises a lid extension portion (128) arranged posteriorly of the protrusion (110) and being configured to allow displacement of the interior volume portion (V1) in a forward and/or downward direction in relation to a top surface (130) of the lid (104) when a forwardly directed force is applied to the inside of the protrusion (110) in the lid (104).

11. The cargo carrier (100) according to claim 10, wherein the lid extension portion (128) is formed by a transition in the lid (104) having a concave cross-sectional curvature.

12. The cargo carrier (100) according to claims 10 or 11 wherein the lid extension portion (128) forms a height difference (D) between a first portion (130) and a second portion (132) of the lid (104) such that when a pulling force is applied in the plane of the first portion (130) and/or in the plane of the second portion (132) over the lid extension portion (128), a rotational force will be formed in the lid extension portion (128) acting to reduce the height difference (D).

13. The cargo carrier (100) according to any one of claims 10 to 12, wherein the lid extension portion (128) extends at an angle in relation to a longitudinal direction (L) of the cargo carrier (100) and wherein at least a portion (120a) of each lid side portion (120) is not provided with a lid extension portion (128).

14. The cargo carrier (100) according to claim 13, wherein the portion (120a) of each lid side portion (120) is at least partially arranged below a forward interior surface (108) of the lid (104).

## Patentansprüche

1. Ladungsträger (100) zum Montieren auf einem Dach eines Fahrzeugs, der Ladungsträger (100) umfassend eine Basis (102) und einen Deckel (104), der mit der Basis (102) zum Bewegen des Deckels (104) zwischen einer offenen Position und einer geschlossenen Position in Bezug auf die Basis (102) gelenkig verbunden ist, wobei die Basis (102) und der Deckel (104) ein Innenbereichsvolumen (V) des Ladungsträgers (100) definieren, das durch Schwenken des Deckels (104) in Bezug auf die Basis (102) in die offenen Position zugänglich gemacht werden kann, wobei die Basis (102) einen Randabschnitt (106) umfasst, der einen Umfang der Basis (102) definiert, wobei der Deckel (104) einen Innenbereichsvolumenabschnitt (V1) umfasst, der mindestens teilweise nach vorn von und über dem Randabschnitt (106) angeordnet ist, wenn der Deckel (104) in der geschlossenen Position in Bezug auf die Basis (102) ist, **gekennzeichnet durch** den Vorsprung (110) des Deckels (104), der als vorderster Teil des Ladungsträgers (100) konfiguriert ist, und umfassend einen im Wesentlichen flachen, nach vorne gerichteten Abschnitt (110a), einen oberen gebogenen Abschnitt (110b) und einen unteren gebogenen Abschnitt (110c), derart, dass der nach vorne gerichtete Abschnitt (110a) konfiguriert ist, um nach oben durch den oberen gebogenen Abschnitt (110b) und nach unten durch den unteren gebogenen Abschnitt (110c) begrenzt zu werden.

2. Ladungsträger (100) nach Anspruch 1, bei dem eine vordere Innenraumoberfläche (108) des Deckels (104) über einem vorderen Abschnitt (106a) des Randabschnitts (106) angeordnet ist.

3. Ladungsträger (100) nach Anspruch 1 oder 2, wobei der Innenbereichsvolumenabschnitt (V1) durch einen Vorsprung (110) in dem Deckel (104) definiert ist.

4. Ladungsträger (100) nach einem der vorstehenden Ansprüche 1 bis 3, wobei der Deckel (104) aus einer Materiallage ausgebildet ist.

5. Ladungsträger (100) nach Anspruch 3, wobei der Vorsprung (110) einen vordersten Abschnitt des Ladungsträgers (100) ausbildet, wobei der Deckel (104) einen vorderen Abweiser (112) aufweist, der konfiguriert ist, um Wind um die Basis (102) herum abzulenken, und wobei der Abweiser (112) unterhalb des Vorsprungs (110) angeordnet ist.

6. Ladungsträger (100) nach Anspruch 5, wobei sich der Abweiser (112) im Wesentlichen linear von dem Vorsprung (110) zu einer Unterkante (114) des Deckels (104) erstreckt.

7. Ladungsträger (100) nach Anspruch 6, wobei die vertikale Erstreckung des Abweisers (112) von dem Vorsprung (110) zu der Unterkante (114) in einem mittleren Abschnitt (112a) größer als in einem seitlichen Abschnitt (112b) des Abweisers (112) ist.

8. Ladungsträger (100) nach einem der vorstehenden Ansprüche 1 bis 7, wobei der Deckel (104) mit der Basis (102) gelenkig verbunden ist, derart, dass der Deckel (104) um eine Deckelachse (A1) schwenkbar ist, die im Wesentlichen parallel zu einer Längsrichtung (L) des Ladungsträgers (100) verläuft.

9. Ladungsträger (100) nach Anspruch 3, wobei der Vorsprung (110) eine Verlängerung in einer seitlichen Richtung (T) des Deckels (104) aufweist.

10. Ladungsträger (100) nach Anspruch 3, wobei der Deckel (104) ferner einen Deckelerstreckungsabschnitt (128) aufweist, der hinter dem Vorsprung (110) angeordnet und konfiguriert ist, um eine Verschiebung des Innenbereichsvolumenabschnitts (V1) in Richtung nach vorne und/oder nach unten relativ zu einer oberen Oberfläche (130) des Deckels (104) zu ermöglichen, wenn eine nach vorne gerichtete Kraft auf die Innenseite des Vorsprungs (110) in dem Deckel (104) ausgeübt wird.

11. Ladungsträger (100) nach Anspruch 10, wobei der Deckelerstreckungsabschnitt (128) durch einen Übergang in dem Deckel (104), der eine konkave Querschnittsbiegung aufweist, ausgebildet wird.

12. Ladungsträger (100) nach Anspruch 10 oder 11, wobei der Deckelerstreckungsabschnitt (128) einen Höhenunterschied (D) zwischen einem ersten Abschnitt (130) und einem zweiten Abschnitt (132) des Deckels (104) ausbildet, derart, dass, wenn eine Zugkraft in der Ebene des ersten Abschnitts (130) und/oder in der Ebene des zweiten Abschnitts (132) über dem Deckelerstreckungsabschnitt (128) ausgeübt wird, eine Drehkraft in dem Deckelerstreckungsabschnitt (128) ausgebildet wird, die bewirkt, dass sich der Höhenunterschied (D) verringert.

13. Ladungsträger (100) nach einem der Ansprüche 10 bis 12, wobei sich der Deckelerstreckungsabschnitt (128) in einem Winkel in Bezug auf eine Längsrichtung (L) des Ladungsträgers (100) erstreckt und wobei mindestens ein Abschnitt (120a) jedes Deckelseitenabschnitts (120) nicht mit einem Deckelerstreckungsabschnitt (128) versehen ist.

14. Ladungsträger (100) nach Anspruch 13, wobei der Abschnitt (120a) jedes Deckelseitenabschnitts (120) mindestens teilweise unterhalb einer vorderen Innenraumoberfläche (108) des Deckels (104) angeordnet ist.

## Revendications

1. Porte-bagage (100) destiné à être monté sur un toit d'un véhicule, le porte-bagage (100) comprenant une base (102) et un couvercle (104) associé de manière articulée à la base (102) pour déplacer le couvercle (104) entre une position ouverte et une position fermée par rapport à la base (102), la base (102) et le couvercle (104) définissant un volume intérieur (V) du porte-bagage (100) auquel on peut accéder en faisant pivoter le couvercle (104) par rapport à la base (102) dans la position ouverte, dans lequel ladite base (102) comprend une partie bordure (106) définissant un périmètre de la base (102), dans lequel le couvercle (104) comprend une partie de volume intérieur (V1) disposée au moins partiellement à l'avant et au-dessus de la partie bordure (106) lorsque le couvercle (104) est dans la position fermée par rapport à la base (102) **caractérisé par** la saillie (110) du couvercle (104) étant conçue comme une part la plus en avant du porte-bagage (100) et comprenant une partie essentiellement plate orientée vers l'avant (110a), une partie incurvée supérieure (110b) et une partie incurvée inférieure (110c) de telle sorte que la partie orientée vers l'avant (110a) est conçue pour être délimitée vers le haut par la partie incurvée supérieure (110b) et vers le bas par la partie incurvée inférieure (110c).

2. Porte-bagage (100) selon la revendication 1, dans lequel une surface intérieure avant (108) du couvercle (104) est disposée au-dessus d'une partie avant (106a) de la partie bordure (106).

3. Porte-bagage (100) selon les revendications 1 ou 2, dans lequel la partie de volume intérieur (V1) est définie par une saillie (110) dans le couvercle (104).

4. Porte-bagage (100) selon l'une quelconque des revendications précédentes 1 à 3, dans lequel le couvercle (104) est formé dans une seule feuille de matériau.

5. Porte-bagage (100) selon la revendication 3, dans lequel la saillie (110) forme une partie la plus en avant du porte-bagage (100), dans lequel le couvercle (104) comprend un déflecteur avant (112) conçu pour dévier le vent autour de la base (102) et dans lequel le déflecteur (112) est disposé sous la saillie (110).

6. Porte-bagage (100) selon la revendication 5, dans lequel le déflecteur (112) s'étend essentiellement de façon linéaire de la saillie (110) à un bord de fond (114) du couvercle (104).

7. Porte-bagage (100) selon la revendication 6, dans lequel l'extension verticale du déflecteur (112) de la saillie (110) au bord de fond (114) est plus importante dans une partie centrale (112a) que dans une partie latérale (112b) du déflecteur (112).

8. Porte-bagage (100) selon l'une quelconque des revendications précédentes 1 à 7, dans lequel le couvercle (104) est associé de manière articulée à la base (102) de telle sorte que le couvercle (104) peut pivoter autour d'un axe de couvercle (A1) essentiellement parallèle à une direction longitudinale (L) du porte-bagage (100).

9. Porte-bagage (100) selon la revendication 3, dans lequel la saillie (110) a un allongement dans une direction latérale (T) du couvercle (104).

10. Porte-bagage (100) selon la revendication 3, dans lequel le couvercle (104) comprend en outre une partie d'extension de couvercle (128) disposée à l'arrière de la saillie (110) et conçue pour permettre le déplacement de la partie de volume intérieur (V1) dans une direction vers l'avant et/ou vers le bas par rapport à une surface supérieure (130) du couvercle (104) lorsqu'une force dirigée vers l'avant est appliquée à l'intérieur de la saillie (110) dans le couvercle (104).

11. Porte-bagage (100) selon la revendication 10, dans lequel la partie d'extension de couvercle (128) est formée par une transition dans le couvercle (104) ayant une courbure de section transversale concave.

12. Porte-bagage (100) selon les revendications 10 ou 11 dans lequel la partie d'extension de couvercle (128) forme une différence de hauteur (D) entre une première partie (130) et une seconde partie (132) du couvercle (104) de telle sorte que lorsqu'une force de traction est appliquée dans le plan de la première partie (130) et/ou dans le plan de la seconde partie (132) sur la partie d'extension de couvercle (128), une force de rotation sera formée dans la partie d'extension de couvercle (128) agissant pour réduire la différence de hauteur (D).

13. Porte-bagage (100) selon l'une quelconque des revendications 10 à 12, dans lequel la partie d'extension de couvercle (128) s'étend selon un angle par rapport à une direction longitudinale (L) du porte-bagage (100) et dans lequel au moins une partie (120a) de chaque partie latérale de couvercle (120) n'est pas pourvue d'une partie d'extension de couvercle (128).

14. Porte-bagage (100) selon la revendication 13, dans lequel la partie (120a) de chaque partie latérale de couvercle (120) est au moins partiellement disposée sous une surface intérieure avant (108) du couvercle (104).
